# EUROPÄISCHE PATENTSCHRIFT

(11) **EP 1 044 453 B1**
(45) Veröffentlichungstag und Bekanntmachung des Hinweises auf die Patenterteilung: **31.08.2005**
(21) Anmeldenummer: 98955525.5
(22) Anmeldetag: 28.10.1998
(51) Int. Cl.: G21C 9/00, G21C 19/28

(54) **VORRICHTUNG ZUR KÜHLUNG INERTISIERTER STÖRFALLATMOSPHÄREN UND ZUR ABTRENNUNG UND BESEITIGUNG VON WASSERSTOFF**
DEVICE FOR COOLING INERT EMERGENCY PROTECTION ATMOSPHERES AND FOR SEPARATING AND ELIMINATING HYDROGEN
DISPOSITIF POUR REFROIDIR DES ATMOSPHERES ANORMALES RENDUES INERTES ET POUR SEPARER ET ELIMINER DE L'HYDROGENE

(30) Priorität: 19.11.1997 DE 19751171
(43) Veröffentlichungstag der Anmeldung: 18.10.2000
(73) Patentinhaber: FORSCHUNGSZENTRUM JÜLICH GMBH, 52425 Jülich (DE)
(72) Erfinder: BRÖCKERHOFF, Peter, D-52428 Jülich (DE); VON LENSA, Werner, D-52379 Langerwehe (DE); VOSWINCKEL, Moritz, D-52062 Aachen (DE)
(74) Vertreter: Rox, Thomas
(86) Internationale Anmeldenummer: PCT/EP1998/006817
(87) Internationale Veröffentlichungsnummer: WO 1999/026255

(56) Entgegenhaltungen:
- EP-A- 0 667 623
- WO-A-97/16832
- US-A- 4 430 293
- US-A- 5 321 730
- US-A- 5 345 481
- PATENT ABSTRACTS OF JAPAN vol. 097, no. 008, 29. August 1997 & JP 09 090092 A (HITACHI LTD ET AL.)

## Beschreibung

Die Erfindung betrifft eine Vorrichtung zur Kühlung inertisierter Störfallatmosphären und zur Abtrennung und Beseitigung von Wasserstoff mit einer einen Gasgemischstrom kühlenden Kühlvorrichtung. In inertisierten Räumen, z.B. in Sicherheitsbehältern von Siedewassereaktoren, wird mit einer derartigen Vorrichtung die Störfallatmosphäre gekühlt, störfallbedingt entstandener Wasserstoff getrocknet und zusammen mit Verunreinigungen, z.B. Aerosolen, abgetrennt. Der abgetrennte Wasserstoff kann z.B. mittels katalytischer Rekombinatoren innerhalb oder außerhalb der Reaktoranlage beseitigt und die Reaktionswärme zur Vermeidung zusätzlicher Aufheizung der Atmosphäre abgeführt werden.

Im Fall schwerer Störfälle in wassergekühlten Kernreaktoren gelangen Wasserdampf und Wasserstoff in den Sicherheitsbehälter. In einigen Sicherheitsbehältern (Containments) dieser Reaktoren befindet sich zur Inertisierung Stickstoff, z.B. bei Siedewasserreaktoren. Außerdem sind nachträgliche Inertisierungen nach Störfalleintritt in Diskussion, um gleichermaßen eine explosible Reaktion des Wasserstoffs mit dem Luftsauerstoff zu vermeiden. Wasserdampf und Wasserstoff führen jedoch zu Druck- und Temperaturerhöhungen in der Störfallatmosphäre. Die relative Druckerhöhung wird dadurch verstärkt, daß die Volumina der Behälter von Siedewasserreaktoren im Vergleich zu Druckwasserreaktoren nur etwa 20.000 m³ betragen. Beides, Druck- und Temperaturerhöhungen, führt zu einer erhöhten Beanspruchung der Containmentwände. Außerdem besteht bei Leckagen die Gefahr des Austritts radiotoxischer Substanzen.

Aufgrund freier Konvektion, speziell bei Anwesenheit von Wasserstoff, besteht auch die Gefahr der Stratifikation oder Bildung von Schichten im oberen Teil des Containments, wenn keine geeigneten Maßnahmen zur Absaugung dieser Gase unternommen werden. Dadurch kann die Wirksamkeit von Kühlem, z.B. Notkondensatoren oder Gebäudekühlern, stark beeinträchtigt werden. Dies gilt besonders dann, wenn sich nichtkondensierbare Gase und schwebefähige Substanzen (Aerosole) an den Kühlem anlagern und deren Kühlwirkung behindern.

Eine Maßnahme zur Kühlung von Störfallatmosphären besteht in der Verwendung aktiver oder passiver Kühleinrichtungen, die an geeigneten Stellen in den Sicherheitsbehältern angebracht sind. Mit ihnen wird ein Teil der in die Störfallatmophäre gelangten Wärme aufgenommen und nach außen abgeführt. Als nachteilig erweisen sich bei dieser Art von Vorrichtungen allerdings höhere Konzentrationen gasförmiger Stoffe, die nicht kondensieren, sich an den wärmeaustauschenden Oberflächen anlagern und somit aufgrund ihres Wärmewiderstands zu einer verschlechterten Wärmeabfuhr führen und die Kondensationsprozesse behindern. Im Stand der Technik hat man versucht, diesem Problem mittels geneigter und z.B. auch mit Rippen versehener Kühlrohre zu begegnen und die abgekühlten nichtkondensierbaren Gase aufgrund ihre höheren Dichte abströmen zu lassen. Dieses Verfahren versagt jedoch bei leichten nichtkondensierbaren Gasen, wie z.B. Wasserstoff.

Die Kondensation des in den Störfallatmosphären enthaltenen Wasser- dampfes führt zu dem gewünschten Ziel einer Druck- und Temperaturerniedrigung, damit die Gefahr von Leckagen mit folgender Freisetzung radiotoxischer Substanzen verringert wird. Der Partialdruck nichtkondensierbarer Gase wird jedoch lediglich durch die Abkühleffekte beeinflußt. Er stellt somit langfristig eine treibende Kraft für die Leckage radiotoxischer Substanzen dar.

Aus dem Stand der Technik der US 4,430,293 ist ein System zum Entfernen von Wasserstoff aus einer Containmentatmosphäre eines Kernkraftwerkes bekannt, bei dem eine Trennvorrichtung mit wasserstoff-permeablen Membranen verwendet wird. Zunächst wird Wasserdampf mit Hilfe eines Kondensators aus dem Gasstrom entfernt und danach wird der Gasstrom mit Hilfe eines Kompressors verdichtet und auf die Betriebstemperatur der wasserstoff-permeablen Membranen abgekühlt. Die Trennvorrichtung trennt dann den Gasstrom in einen ersten Strom, der mit Wasserstoff angereichert ist, und einen zweiten Gasstrom, in dem der Wasserstoff entfernt worden ist. Nach dem Durchströmen durch einen Aktivkohle-Absorber zum Entfernen eventuell vorhandener radioaktiver Teile wird das den Wasserstoffgas enthaltene Gasstrom in einem Gasbrenner mit atmosphärischer Luft abgefackelt.

Aus der EP 0 416 140 A1 ist ebenfalls eine Vorrichtung zur Entfernung von Wasserstoff aus einem Wasserstoff und Sauerstoff enthaltenen Gasgemisch bekannt, diese Vorrichtung weist eine Katalysatoranordnung zur Entfernung des Wasserstoff in schachtartiger Form auf, so daß die aufgrund der Katalysationswirkung entstehende Wärme zu einer Kaminwirkung innerhalb des Schachtes und damit zu einer ausreichenden Druckdifferenz führt. Innerhalb des Schachtes sind Filter vorgesehen, mit denen Schadstoffe, insbesondere Aerosole aus dem aufströmenden Gasstrom ausgefiltert werden.

Aus dem Stand der Technik der WO 97/16832 ist schließlich ein System zum passiven Entfernen von Wasserstoff aus der Containmentatmosphäre eines wassergekühlten Kernreaktors bekannt, bei dem im Falle eines Unfalls die Konvektionsströme innerhalb des Containments durch Leitbleche zu einer Zirkulation geführt werden, so daß eine stetige Umwälzung der Containmentatmosphäre erfolgt, wobei ein Teil des umströmenden Gases an einem katalytischen Rekombinator vorbei geleitet wird, um die katalytische Rekombination von Wasserstoff zu ermöglichen. Weiterhin sind strömungsabwärts des Rekombinators Kühlleitungen vorgesehen, um die bei der Rekombination entstandene Wärme zumindest teilweise aus dem Gasstrom zu entfernen.

Daher liegt der vorliegenden Erfindung das technische Problem zugrunde, die Vorrichtung zur Kühlung inertisierter Störfallatmosphären und zur Abtrennung und Beseitigung von Wasserstoff derart auszugestalten und weiterzubilden, daß einerseits eine Trocknung des Wasserstoffes und andererseits eine Separierung schwerer, nichtkondensierbarer Gase sowie fester Schwebeteilchen erzielt wird.

Das zuvor aufgezeigte technische Problem wird erfindungsgemäß durch eine Vorrichtung mit den Merkmalen des Anspruches 1 gelöst. Erfindungsgemäß ist erkannt worden, auf der strömungsabwärts gelegenen Seite der Kühlvorrichtung eine Vorrichtung zur Führung und Beruhigung der Strömung anzuordnen, die aus mindestens einer ersten und einer zweiten Schicht aufgebaut ist. Dabei sind die Kühlvorrichtung und die ersten und zweiten Schichten der Vorrichtung schräg nach unten verlaufend im Gasgemischstrom angeordnet, und die Schichten sind im wesentlichen vollflächig oder siebartig ausgebildet und weisen Öffnungen auf. Die Funktionsweise der erfindungsgemäßen Vorrichtung besteht zunächst darin, daß das Gasgemisch an den Elementen der Kühlvorrichtung gekühlt wird, so daß der Wasserdampf des Gasgemisches zum größten Teil kondensiert. Das dann an den Elementen der Kühlvorrichtung anhaftende Wasser läuft wegen der Schräg- stellung der Kühlvorrichtung nach unten ab, so daß anhaftende nichtkondensierbare Gase und abgelagerte Aerosole durch das Kondensat immer wieder abgewaschen werden. Um schwere und leichte nichtkondensierbare Gase des durch die Kühlvorrichtung hindurchtretenden Gasgemisches zu trennen, ist strömungsabwärts hinter der Kühlvorrichtung die Vorrichtung zur Führung und Beruhigung der Strömung nachgeschaltet. An dieser Vorrichtung wird die Hauptströmung nach unten abgeführt, ein Teil der Strömung, z.B. durch Beeinflussung der Grenzschicht, abgebremst und beruhigt. Insgesamt ergibt sich eine starke Reduzierung der Strömungsgeschwindigkeit, so daß der Wasserstoff von den anderen in dem Gasgemisch vorhandenen Substanzen abgetrennt wird. Denn aufgrund ihrer geringen Dichte steigen wasserstoffreiche Gemische innerhalb des beruhigten Gasgemisches nach oben, während schwerere Substanzen der Gasströmung nach unten abgeführt werden.

Die ersten und zweiten Schichten der Vorrichtung zur Führung und Beruhigung der Strömung sind in bevorzugter Weise unterschiedlich für ihre Funktion ausgebildet. So ist beispielsweise die der Strömung zugewandte erste Schicht der Vorrichtung an der Strömung zugewandten Seite mit Rippen oder mit vorstehenden Kanten versehen, wobei vorzugsweise angestellte Schlitze verwendet werden. Dadurch wird durch die Bildung von Abrißkanten ein verbessertes Aufreißen der Grenzschicht erreicht, die sich an der Oberfläche der Schicht ausbildet. Eine weitere Ausgestaltung der Erfindung besteht darin, daß mindestens zwei erste Schichten wie zuvor beschrieben vorgesehen sind.

Die hinter der erste Schicht bzw. den ersten Schichten angeordnete zweite Schicht bzw. zweiten Schichten sind dagegen lediglich mit einer Mehrzahl von Öffnungen versehen, so daß eine Abbremsung der Gasströmung erreicht wird. So können beispielsweise Platten oder Bleche mit einer Mehrzahl von Öffnungen in jeglicher Ausgestaltung oder Netze verwendet werden, wobei die Öffnungen in geeigneter Weise im Hinblick auf geringe Druckverluste und den Druckausgleich dimensioniert werden.

In weiter bevorzugter Ausführungsweise ist oberhalb der Kühlvorrichtung und der Vorrichtung zur Führung und Beruhigung der Strömung ein Sammelraum angeordnet, in dem sich die leichten Gase, insbesondere Wasserstoff, ansammeln und weiter beruhigt werden. Insbesondere ist dieser Sammelraum an der Containmentwand angeordnet und als geschlossener Ringraum oder als Raum mit seitlichen Trennwänden ausgebildet. Der über die Kühlvorrichtung getrocknete und über die dahinter angeordnete Vorrichtung abgebremste und abgeschiedene Wasserstoff wird anschließend einer Wasserstoffumwandlung innerhalb oder außerhalb des Containments zugeführt und unschädlich gemacht. Dazu ist eine Abzugsvorrichtung im Sammelraum angeordnet, die unter Vermeidung größerer Verwirbelungen den Wasserstoff einer Rekombinationseinheit zuführt.

Sofern der Wasserstoff, abweichend von den obigen Annahmen, in der Kondensationskammer angereichert wird, eignet sich die Vorrichtung auch zumindest zur Vortrocknung und Anreicherung des abzuziehenden Wasserstoff enthaltenden Gasgemisches.

Im folgenden wird die Erfindung anhand von Ausführungsbeispielen näher erläutert, wobei auf die Zeichnung Bezug genommen wird. In der Zeichnung zeigt
- Fig. 1: im Querschnitt eine innerhalb eines Sicherheitsbehälters angeordnete erfindungsgemäße Vorrichtung zur Kühlung inertisierter Atmosphären und zur Wasserstoffabtrennung und -beseitigung,
- Fig. 2: im Querschnitt eine vergrößerte Darstellung der in Fig. 1 dargestellten erfindungsgemäßen Vorrichtung sowie schematisch eine Vorrichtung zur Beseitigung des Wasserstoffs innerhalb des Containments und
- Fig. 3: im Querschnitt eine vergrößerte Darstellung der in Fig. 1 dargestellten erfindungsgemäßen Vorrichtung sowie schematisch eine Vorrichtung zur Beseitigung des Wasserstoffs außerhalb des Containments.

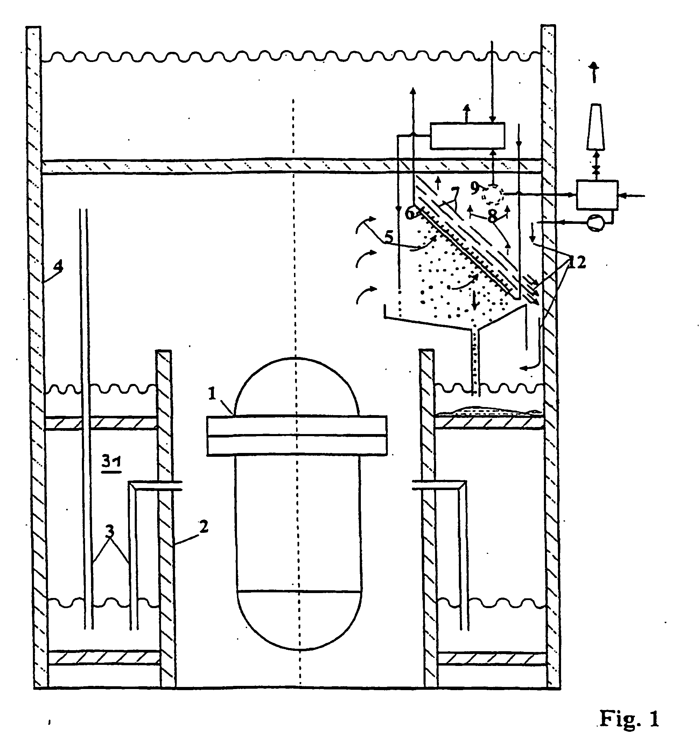

In Fig. 1 ist eine erfindungsgemäße Vorrichtung zur Kühlung inertisierter Störfallatmosphären und zur Abtrennung und Beseitigung von Wasserstoff dargestellt, die wie im folgenden beschrieben aufgebaut ist.

Ein Reaktordruckbehälter list in einer Sicherheitszelle 2 angeordnet. Bei einem schweren, hypothetischen Störfall mit Freisetzung von Wasserstoff und Wasserdampf entsteht ein Überdruck von bis zu 0,7 MPa. Durch Überströmrohre 3 zwischen dem Reaktordruckbehälter 1 und einer Kondensationskammer 31 strömen Wasserstoff und Wasserdampf in das Innere der mit Stickstoff gefüllten Kondensationskammer 31. Infolge der hohen Temperaturen der Störfallatmosphären kommt es zu einem mit 5 gekennzeichneten Auftrieb. Das heiße Gemisch wird an Kühlrohren 6 des Gebäudekühlers abgekühlt, wobei der Gebäudekühler im oberen Bereich des Containments an einer Containmentwand 4 angeordnet ist. Dabei wird der Wasserdampf zum größten Teil kondensiert. Dargestellt ist hier nur ein Rohr aus einem Rohrbündel des Gebäudekühlers. Zur Verbesserung der Wärmeübergangskoeffizienten können die Rohroberflächen mit Rippen in einer Weise versehen werden, daß abgelagerte Aerosole durch das Kondensat immer wieder abgewaschen werden bzw. als Kondensationskeime wirken und niedergeschlagen werden.

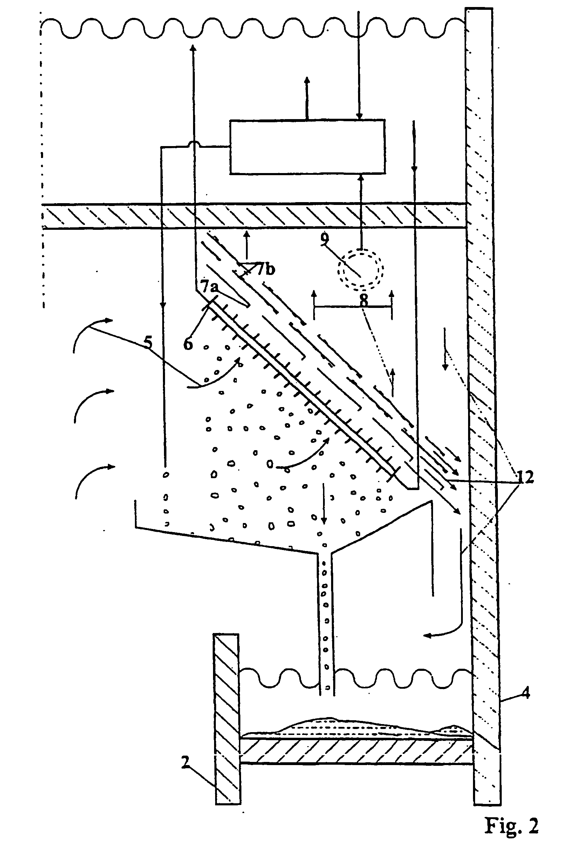

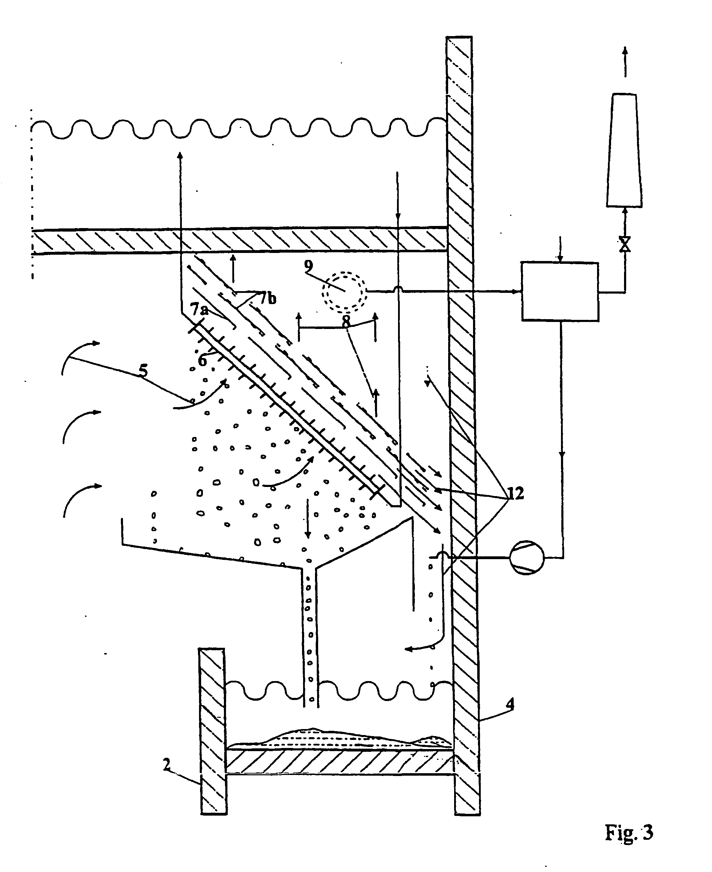

Zur Trennung schwerer und leichter nichtkondensierbarer Gase ist der Kühlvorrichtung 6 eine Vorrichtung 7 zur Führung und Beruhigung der Strömung nachgeschaltet, an der die Hauptströmung nach unten abgeführt, ein Teil der Strömung z.B. durch Beeinflussung der Grenzschicht abgebremst und beruhigt wird. Dabei ist die Wirkungsweise der Vorrichtung 7 wie folgt. Ein Teil des ankommenden Gasgemischs samt der festen Bestandteile trifft auf die erste Schicht 7a der Vorrichtung, wird abwärts geleitet und z.B. an den Nasen der stromabwärts gelegenen Seite der ersten Schicht 7a durch Grenzschichtbeeinflussung oder angestellte Schlitze abgeschält. Dabei werden leichtere Substanzen abgetrennt, die nach sukzessiver Strömungsberuhigung nach oben gelangen können. In den angedeuteten folgenden zweiten Schichten 7b werden vorzugsweise Bleche eingesetzt, in welche Durchbrüche mit beliebigen Querschnitten eingestanzt sind, z.B. Kreise, Lochbleche oder Rechtecke oder Quadrate. Es ist auch der Einsatz von Netzen möglich. Außerdem sind jalousieartige Anordnungen von Führungslamellen oder -streifen möglich. Dies verdeutlicht die Schrägstellung der einzelnen Lamellen in den Lagen zwei und drei, wie in den Fig. 2 und 3 zu erkennen ist. Die Durchbrüche oder Schlitze ermöglichen den Durchtritt der leichten Substanzen. Von Lage zu Lage wird die Strömung immer weiter beruhigt, um den Abtrennvorgang durch den Auftrieb leichter Fraktionen zu begünstigen.

Somit wird der Wasserstoff von den anderen in dem Gasgemisch vorhandenen Substanzen abgetrennt, weil der Wasserstoff wegen seiner geringen Dichte nach oben steigt. So kommt es mit zunehmender Beruhigung der Strömung im Sammelraum 8 zu einer Anreicherung von Gasen, die leichter sind als die übrigen nichtkondensierbaren Gase 12 und zu einer weiteren Abscheidung von Aerosolen, welche z.T. radiologisch hochbelastet sein können.

Der Sammelraum 8 muß zur Vermeidung des Wasserstoffaustritts entweder ein geschlossener Ringraum sein oder seitlich mit Trennwänden versehen werden, die in der Zeichnung nicht dargestellt sind. Mit einer Abzugsvorrichtung 9 wird der Wasserstoff - unter Vermeidung größerer Verwirbelungen - abgezogen. Er kann mittels semipermeabler Vorrichtungen von dann noch vorhandenen Substanzen weiter abgetrennt und auf zwei Wegen, die in den Fig. 2 und 3 im Detail dargestellt sind, beseitigt bzw. rekombiniert werden.

## Patentansprüche

1. Sicherheitsbehälter mit einer Vorrichtung zur Kühlung inertisierter Störfallatmosphären und zur Abtrennung von Wasserstoff
- mit einer einen Gasgemischstrom innerhalb des Sicherheitsbehälters kühlenden Kühlvorrichtung (6),
**dadurch gekennzeichnet,**
- **daß** eine Vorrichtung (7) zur Führung und Beruhigung der Strömung vorgesehen ist, die auf der strömungsabwärts gelegenen Seite der Kühlvorrichtung (6) angeordnet ist und die mindestens eine erste Schicht (7a) und mindestens eine zweite Schicht (7b) aufweist,
- wobei die Kühlvorrichtung (6) und die erste und die zweite Schicht (7a, 7b) schräg nach unten verlaufend im Gasgemischstrom angeordnet sind und
- wobei die erste und die zweite Schicht (7a, 7b) Öffnungen aufweisen.

2. Sicherheitsbehälter nach Anspruch 1, **dadurch gekennzeichnet, daß** die erste Schicht (7a) aus einer Platte mit einer Mehrzahl von Öffnungen besteht.

3. Sicherheitsbehälter nach Anspruch 1 oder 2, **dadurch gekennzeichnet, daß** die erste Schicht (7a) an der Unterseite Elemente zur Grenzschichtbeeinflussung aufweist.

4. Sicherheitsbehälter nach Anspruch 3, **dadurch gekennzeichnet, daß** die Elemente zur Grenzschichtbeeinflüssung als Rippen oder vorstehende Kanten ausgebildet sind.

5. Sicherheitsbehälter nach einem der Ansprüche 1 bis 4, **dadurch gekennzeichnet, daß** mindestens zwei erste Schichten (7a) vorgesehen sind.

6. Sicherheitsbehälter nach einem der Ansprüche 1 bis 5, **dadurch gekennzeichnet, daß** die zweite Schicht (7b) aus einer Platte mit einer Mehrzahl von Öffnungen oder aus einem Netz oder aus einer jalousieartigen Anordnung von Führungselementen besteht.

7. Sicherheitsbehälter nach einem der Ansprilche 1 bis 6, **dadurch gekennzeichnet, daß** mindestens zwei zweite Schichten (7b) vorgesehen sind.

8. Sicherheitsbehälter nach einem der Ansprüche 1 bis 7, **dadurch gekennzeichnet, daß** ein Sammelraum (8) oberhalb der Vorrichtung (7) angeordnet ist.

9. Sicherheitsbehälter nach Anspruch 8, **dadurch gekennzeichnet, daß** der Sammelraum (8) an der Containmentwand oder in der Kondensationskammer angeordnet ist und als geschlossener Ringraum oder als Raum mit seitlichen Trennwänden ausgebildet ist.

10. Sicherheitsbehälter nach Anspruch 8 oder 9, **dadurch gekennzeichnet, daß** eine Abzugsvorrichtung (9) im Sammelraum (8) angeordnet ist.

11. Sicherheitsbehälter nach Anspruch 10, **dadurch gekennzeichnet, daß** strömungsabwärts hinter der Abzugsvorrichtung (9) eine Vorrichtung zur Wasserstoffumwandlung innerhalb oder außerhalb des Containments vorgesehen ist.

## Claims

1. Containment with a device for cooling inerted containment atmospheres and for separating hydrogen
- with a cooling device (6) which cools a gas mixture flow within the containment,
**characterised in that**
- a device (7) is provided to guide and to calm the flow, which is disposed on the downstream side of the cooling device (6) and which has at least one first layer (7a) and at least one second layer (7b),
- whereby the cooling device (6) and the first and the second layer (7a, 7b) are disposed running slantwise downwards into the flow of gas mixture and
- whereby the first and the second layer (7a, 7b) have openings.

2. Containment according to claim 1, **characterised in that** the first layer (7a) consists of a plate with a multiplicity of openings.

3. Containment according to claim 1 or 2, **characterised in that** the first layer (7a) has elements on its underside to influence the boundary layer.

4. Containment according to claim 3, **characterised in that** the elements to influence the boundary layer are in the form of ribs or projecting edges.

5. Containment according to one of claims 1 to 4, **characterised in that** at least two first layers (7a) are provided.

6. Containment according to one of claims 1 to 5, **characterised in that** the second layer (7b) consists of a plate with a multiplicity of openings or of a lattice or of a louvre-type arrangement of guide elements.

7. Containment according to one of claims 1 to 6, **characterised in that** at least two second layers (7b) are provided.

8. Containment according to one of claims 1 to 7, **characterised in that** a collecting space (8) is disposed above the device (7).

9. Containment according to claim 8, **characterised in that** the collecting space (8) is disposed on the containment wall or in the condensation chamber and is designed as a closed annulus or as a space with lateral partition walls.

10. Containment according to claim 8 or 9, **characterised in that** an extraction device (9) is disposed in the collecting space (8).

11. Containment according to claim 11, **characterised in that** downstream behind the extraction device (9), a device is provided to convert hydrogen within or outside the containment.

## Revendications

1. Enceinte de confinement comprenant un dispositif pour refroidir des atmosphères anormales rendues inertes et pour séparer de l'hydrogène
- avec un dispositif de refroidissement (6) refroidissant un écoulement de mélange gazeux à l'intérieur de l'enceinte de confinement,
**caractérisée en ce qu'**
- il est prévu un système (7) pour guider et stabiliser l'écoulement qui est disposé du côté du dispositif de refroidissement (6) situé en aval et qui présente au moins une première couche (7a) et au moins une seconde couche (7b),
- le dispositif de refroidissement (6) ainsi que les première et seconde couches (7a, 7b) sont disposés de façon inclinée vers le bas dans l'écoulement du mélange gazeux, et
- les première et seconde couches (7a, 7b) présentent des ouvertures.

2. Enceinte de confinement selon la revendication 1, **caractérisée en ce que** la première couche (7a) est constituée d'une plaque comprenant une pluralité d'ouvertures.

3. Enceinte de confinement selon la revendication 1 ou 2, **caractérisée en ce que** la première couche (7a) présente sur la face inférieure des éléments pour influencer la couche limite.

4. Enceinte de confinement selon la revendication 3, **caractérisée en ce que** les éléments pour influencer la couche limite sont réalisés sous forme de nervures ou de bords saillants.

5. Enceinte de confinement selon l'une quelconque des revendications 1 à 4, **caractérisée en ce qu'**il est prévu au moins deux premières couches (7a).

6. Enceinte de confinement selon l'une quelconque des revendications 1 à 5, **caractérisée en ce que** la seconde couche (7b) est constituée d'une plaque comportant une pluralité d'ouvertures ou d'un réseau ou d'un agencement d'éléments de guidage du type en volet.

7. Enceinte de confinement selon l'une quelconque des revendications 1 à 6, **caractérisée en ce qu'**il est prévu au moins deux secondes couches (7b).

8. Enceinte de confinement selon l'une quelconque des revendications 1 à 7, **caractérisée en ce qu'**un espace collecteur (8) est disposé au-dessus du système (7).

9. Enceinte de confinement selon la revendication 8, **caractérisée en ce que** l'espace collecteur (8) est disposé sur la paroi de l'enceinte de confinement ou dans la chambre de condensation et est réalisé sous forme d'espace annulaire fermé ou d'espace comprenant des cloisons latérales.

10. Enceinte de confinement selon la revendication 8 ou 9, **caractérisée en ce qu'**un dispositif d'aspiration (9) est disposé dans l'espace collecteur (8).

11. Enceinte de confinement selon la revendication 10, **caractérisée en ce qu'**il est prévu, en aval en arrière du dispositif d'aspiration (9), un dispositif pour la transformation de l'hydrogène à l'intérieur ou à l'extérieur de l'enceinte de confinement.
